Europäisches Patentamt

(19) European Patent Office

Office européen des brevets

(11) Publication number: **0 118 899**

**A2**

(12) # EUROPEAN PATENT APPLICATION

(21) Application number: **84102579.4**

(22) Date of filing: **09.03.84**

(51) Int. Cl.³: **A 01 K 27/00**
**A 01 K 15/00**

(30) Priority: **11.03.83 US 474564**

(43) Date of publication of application:
**19.09.84 Bulletin 84/38**

(84) Designated Contracting States:
**AT BE CH DE FR GB IT LI LU NL**

(71) Applicant: **Miller, Marie Zerna**
**12983 Montford Street**
**Pacoima California 91331(US)**

(72) Inventor: **Miller, Marie Zerna**
**12983 Montford Street**
**Pacoima California 91331(US)**

(74) Representative: **Baillie, Iain Cameron et al,**
**c/o Ladas & Parry Isartorplatz 5**
**D-8000 München 2(DE)**

(54) Improved animal pet medical collar.

㉝ An improved animal pet medical collar is provided which comprises a solid resilient foam body having a doughnut shape formed by a peripheral, generally annular wall defining a central opening adapted to fit around the neck of an animal pet. The wall is wide enough to prevent the pet wearing it from mouthing a part of its body and thus injuring itself by pulling stitches, licking wounds, etc. The body wall has a pair of spaced opposite ends bridged by a drawstring anchored to one of the ends and passing through the other end to the outside of the body, against which it is releasably locked by a spring clamp or the like. The clamp can be a pair of spring-biased tubes with alignable transverse, drawstring-receiving openings. The drawstring can include a spring or be formed of stretchable material. The drawstring can also include an alarm actuable by excess drawstring tension. The collar can further include recessed drawstring detents in a concealed compartment and a cover which bridges the body gap. The collar is simple, inexpensive, durable and efficient.

## IMPROVED ANIMAL PET MEDICAL COLLAR

- - - - - - -

The present invention generally relates to animal medical aids and more particularly to an improved animal pet medical collar to prevent an animal from pulling its stitches, bandages, etc.

## BACKGROUND OF THE INVENTION

Animals such as dogs and cats are very popular as pets. When ill, however they require very careful attention, particularly since they make difficult patients, often tearing out their stitches after surgery, ripping off their bandages, licking and chewing their infected body parts, removing medication, etc. They do not convalesce well in strange environments such as veterinary hospitals and are therefore usually brought home as soon as possible. At home, however, their natural propensity to freely move around is severely hampered if they are trussed up to protect their injured parts from themselves.

Accordingly, various collars have been devised in an attempt to solve these problems. Devices of this type are disclosed in U.S. Patents 3,013,530, 3,036,554, 4,036,179 and 4,286,547. Some of the disadvantages of these devices are: a large space around the neck; a multitude of strings spanning the space, making the device difficult to adjust; they are cumbersome and very vulnerable to entanglement with bushes and other foreign objects; limited adjustability; they are body trusses; and generally they tend to seriously interfere with normal movements of the pet.

-2-

Accordingly, there remains a need for an improved inexpensive, durable and efficient device capable of being simply and rapidly installed and adjusted to fit the pet and providing a comfortable and effective restraint against the pet pulling out its stitches, stripping off bandages, rasping sores, etc. Such device should not interfere with normal movement of the animal and should cushion it against injury, as well as protect it from becoming entangled with shrubbery, etc.

## SUMMARY OF THE INVENTION

According to one aspect of the invention, there is provided an animal pet medical collar comprising, a solid foam resilient body having a peripheral, generally annular wall defining a generally central space, the body being adapted to fit around the neck of an animal, the opposed ends of the wall defining a size adjustment gap; and releasably adjustable closing and locking means secured to the body for securing the opposed ends to each other, thereby locking a pet animal in the collar, the closing and locking means including spring tensioning means.

Preferably, the closing and locking means comprises a drawstring secured to one of the opposed ends of the wall, the drawstring bridging the gap, passing through the other opposed end of the wall to the outer surface of the body and adjustably releasably locked in place thereagainst by the spring tensioning means. The spring tensioning means may comprise a spring-biased clamp which releasably clamps to the drawstring. Preferably, the clamp comprises a plunger supported in and extending out of one end of a housing, the plunger and housing

-3-

each having a transverse passageway through which the drawstring passes, the plunger being biased by a spring in the housing to a first position where the passageways do not register and the drawstring is securely held by the clamp, but urgeable by finger pressure to a second position where the passageways do register to permit free movement of the drawstring.

The drawstring may comprise elastic means permitting lengthening thereof to prevent accidental injury of a pet wearing the collar, such as a stretchable elastomer or a spring. The arrangement may include an alarm which is actuated when the tension on the drawstring exceeds a predetermined limit.

## BRIEF DESCRIPTION OF THE DRAWINGS

In the drawings:-

FIGURE 1 is a schematic perspective view of a first preferred embodiment of the improved animal pet medical collar of the present invention, shown disposed on the neck of a dog;

FIGURE 2 is an enlarged schematic side elevation, partly broken away, of the releasable spring locking component utilized in the collar of FIGURE 1;

FIGURE 3 is an enlarged fragmentary schematic top plan view of a first modified form of the drawstring used in the collar of the present invention;

FIGURE 4 is an enlarged, fragmentary, schematic side elevation, partly broken away, of a second modified form of the drawstring used in the collar of the present invention, showing a tension actuatable buzzer alarm device incorporated therein; and

FIGURE 5 is a schematic perspective view of a second preferred embodiment of the improved animal pet medical collar of the present invention.

-4-

## DETAILED DESCRIPTION OF THE PREFERRED EMBODIMENTS

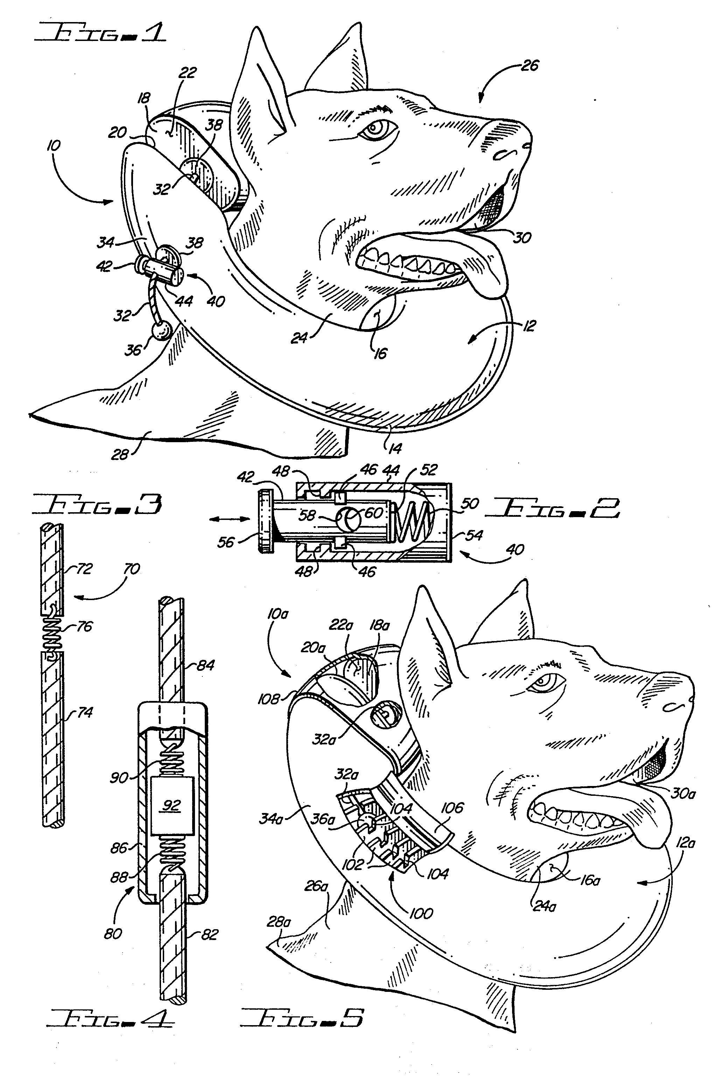

Referring to FIGURES 1 and 2 of the drawings, a first preferred embodiment of the improved pet animal collar of the present invention is schematically depicted therein. Thus, a collar 10 is shown in perspective view in FIGURE 1. The collar 10 comprises a generally annular solid body 12 of self-supporting foamed material, such as polyurethane foam, foamed polystyrene or the like. Alternatively, foamed natural and/or synthetic rubber can be used.

The body 12 is light in weight, comfortable to wear, is somewhat resilient and flexible and is doughnut shaped, comprising an annular solid wall 14 defining a central neck receiving space 16.

The wall 14 has two opposed ends 18 and 20 which terminate facing each other to define a gap 22 extending radially from the outer perimeter of wall 14 to central space 16. The gap 22 can be made sufficiently wide to permit the collar 10 to be placed around the neck 24 of a pet 26. The wall 14 is of sufficient width so that when the collar 14 is worn around the neck 24 of pet 26, as shown in FIGURE 1, the pet 26 cannot reach its body 28 with its mouth 30 to rip out stitches, rip off bandages, etc. (not shown). However, the wall 14 is sufficiently thin (i.e., of sufficiently shallow depth) so that it is very light in weight, and can be made to flex to at least partially widen gap 22 to enable the collar 10 to be more easily installed on the neck 24. The wall 14 may be made of sufficiently resilient material such that the gap 22 can be fully closed and opened by approximating and retracting the wall ends 18 and 20.

-5-

The collar 10 includes a drawstring 32 of cotton, leather, plastic, metal wire or the like which is connected to the end 18, bridges the gap 22 and passes through the end 20 and outwardly through the body 12 beyond the outer surface 34 thereof. A ball 36 is secured to the free outer end of drawstring 32 and various guide rings or grommets 38 are imbedded at various locations along the path of the drawstring 32 through the body 12.

The collar 10 also includes a spring clamp 40 releasably cinching the drawstring 32 against the surface 34, as shown in FIGURE 1. As indicated more particularly in FIGURE 2, the clamp 40 comprises a cylindrical plunger 42 slideably received in and extending out of a hollow cylindrical housing 44. The plunger 42 has detents 46 on the outer surface thereof which bear against detents 48 on the housing 44 and limit the outward movement of the plunger 42 to a first position shown in FIGURE 2. A spring 50 is interposed between the inner end 52 of the plunger 42 and the end 54 of housing 44 and biases the plunger 42 to the first position. The plunger 42 includes an expanded opposite end 56 against which finger pressure can be applied to force the plunger 42 against the action of the spring 50 to compress it and move the plunger 42 to a second position where a drawstring receiving opening 58 in the plunger 42 and an opening 60 in housing 44 are aligned.

In the first position shown in FIGURE 2, the openings 58 and 60 are out of alignment and the drawstring 42 is pinched tightly by the plunger 42 so it cannot slip through the plunger 42 and the

-6-

housing 44. In this way, the drawstring 42 can be tightly pulled to hold the collar 10 closed around the neck 24 of a pet 26. In order to remove the collar 10 from the neck 24, the plunger 42 is pressed into housing 44 to align the openings 58 and 60. The clamp 40 is then slid away from the body 12, and the gap 22 is allowed to expand (by flexing of body 12) after which the collar 10 is slipped over the pet's head and removed. The reverse procedure is used to secure the collar 10 on the pet 26.

Thus, the collar 10 is easy to fit and use, is durable, simple and inexpensive. Its foam construction is light in weight, prevents injury to the pet and effectively prevents the pet from attacking stitches, etc. Moreover, the drawstring 32 can be kept short and largely concealed so that it does not become entangled with foreign objects.

A modified version of the drawstring which can be used in the collar of FIGURE 1 is shown schematically in FIGURE 3. This drawstring 70 comprises two lengths of cord 72 and 74 connected by a longitudinally extending coil spring 76. The spring 76 imparts sufficient stretchability to the drawstring 70 to prevent discomfort of a pet 26 when the collar body 12 is pulled tightly around the neck 24. It will be understood that, if desired, substantially the same purpose can be accomplished through the use of rubber, elastic or the like as part of or all of drawstring 70.

A further version of a drawstring which can be used in the collar of FIGURE 1 is shown schematically in FIGURE 4. This drawstring 80 comprises portions 82 and 84 joined in a box 86 by springs 88 and 90 to an alarm buzzer 92 which is activated by a predetermined tension on springs 88 and 90. This alarm 92 warns of excess tension on the neck 24 of a pet 26, as in the case where the collar 10 is pulled too tightly around the neck 24. Prompt action can be taken by the pet owner to relieve the tension and save the pet from injury.

A second preferred embodiment of an improved animal pet medical collar 10a of the present invention is schematically depicted in FIGURE 5. The components thereof similar to those in FIGURES 1, 2 and 3 bear the same numerals but are succeeded by the letter "a". The collar 10a comprises a solid resilient body 12a of foamed material formed of an annular wall 14a defining a central space 16a. Opposed wall ends 18a and 20a define a gap 22a leading to the space 16a. The collar 10a is fitted around the neck 24a of a pet 26a and is of doughnut shape. The size is such to prevent the pet 26a from reaching its body 28a to pull stitches, etc. with its mouth 30a. The collar body 12a is spread to widen the gap 22a, then placed around the neck 24. The gap 22a is thereafter narrowed by pulling the ends 18a and 20a toward each other by a drawstring 32a secured to the end 18a, bridging the gap 22a and passing through the end 20a and body 12a to a recessed compartment 100 disposed in the outer surface 34a of the body 12a.

The compartment 100 is curved and elongated and includes a plurality of spaced transverse walls 102, each with a recess 104 adapted to receive the drawstring 32a but not the ball 36a secured to the free end of the drawstring 32a. The ball 36a is made to abut the selected wall 102 to hold releas-

-8-

ably the drawstring 32a in the desired locked position. The compartment 100, which may be comprised of metal, plastic, etc., has a hinged lid 106 to conceal the drawstring 32a. A curved cover 108, of metal, plastic, etc., slides over and conceals the outer surface 34a of the body 12a at the ends 18a and 20a and the gap 22a. The result is a uniformly smooth collar 10a with the drawstring 32a totally concealed but readily accessible for adjustment of the collar size. The collar 10a thus presents no surfaces to catch on foreign objects. The collar 10a otherwise has the same advantages as collar 10, effectively protecting the pet 26a from injuring itself by pulling stitches, etc. and from being injured by bumping into furniture, etc. while in a weakened condition.

Various modifications, changes, alterations and additions can be made in the improved animal pet medical collar of the present invention, its components and their parameters.

0118899

-9-

## CLAIMS

1. An animal pet medical collar comprising, a solid foam resilient body having a peripheral, generally annular wall defining a generally central space, the body being adapted to fit around the neck of an animal, the opposed ends of the wall defining a size adjustment gap; and releasably adjustable closing and locking means secured to the body for securing the opposed ends to each other, thereby locking a pet animal in the collar, the closing and locking means including spring tensioning means.

2. The collar as claimed in Claim 1 wherein the closing and locking means comprises a drawstring secured to one of the opposed ends of the wall, the drawstring bridging the gap, passing through the other opposed end of the wall to the outer surface of the body and adjustably releasably locked in place thereagainst by the spring tensioning means.

3. The collar as claimed in Claims 1 or 2 wherein the spring tensioning means comprises a spring-biased clamp which releasably clamps to the drawstring.

4. The collar as claimed in Claim 3 wherein the clamp comprises a plunger supported in and extending out of one end of a housing, the plunger and housing each having a transverse passageway through which the drawstring passes, the plunger being biased by a spring in the housing to a first position where the passageways do not register and the drawstring is securely held by the clamp, but urgeable by finger pressure to a second position where the passageways do register to permit free

-10-

movement of the drawstring.

5.   The collar as claimed in Claims 2 to 5
wherein the drawstring comprises elastic means
permitting lengthening thereof to prevent accidental
injury of a pet wearing the collar.

6.   The collar as claimed in Claim 5 wherein
the drawstring comprises a stretchable elastomer.

7.   The collar as claimed in Claim 5 wherein
the drawstring comprises two portions joined by a
spring.

8.   The collar as claimed in Claim 5 wherein
the drawstring includes an alarm which is actuated
when the tension on the drawstring exceeds a predetermined limit and wherein the body wall is of sufficient width to prevent a pet wearing the collar
from mouthing a part of its body.

9.   The collar as claimed in Claim 8 wherein
the drawstring includes two portions each joined
by spring means to the alarm, the alarm being
activated by tension on the spring means.

10.   The collar as claimed in Claims 2 to 9
wherein the body is resilient and generally doughnut
shaped and wherein the free end of the drawstring
bears an enlargement which is releasably secured
to the body by cinching against one of a plurality
of spaced walls disposed in a recessed compartment
in the body.

11. The collar as claimed in Claim 10 wherein the compartment has an openable cover, and wherein the collar includes a cover slideably disposed over the opposed ends and gap, thereby concealing the drawstring and preventing entanglement of the collar with foreign objects.

FIG-1

FIG-3

FIG-2

FIG-4

FIG-5

0118399

1/1